(19) Europäisches Patentamt
European Patent Office
Office européen des brevets

(11) EP 4 311 811 A1

(12) EUROPÄISCHE PATENTANMELDUNG

(43) Veröffentlichungstag:
31.01.2024 Patentblatt 2024/05

(51) Internationale Patentklassifikation (IPC):
C03C 17/00 (2006.01)

(21) Anmeldenummer: 23183883.0

(22) Anmeldetag: 06.07.2023

(52) Gemeinsame Patentklassifikation (CPC):
C03C 17/009; C03C 17/002; C03C 2217/445;
C03C 2217/485; C03C 2217/72; C03C 2217/78;
C03C 2218/113; C03C 2218/36

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(30) Priorität: 25.07.2022 DE 102022118562

(71) Anmelder: SCHOTT AG
55122 Mainz (DE)

(72) Erfinder:
• MANGOLD, Stephanie
55122 Mainz (DE)
• HOFFMANN, Ulf
55122 Mainz (DE)
• MILANOVSKA, Angelina
55122 Mainz (DE)
• SWEECK, Tamara
55122 Mainz (DE)

(74) Vertreter: Schott Corporate IP
Hattenbergstraße 10
55122 Mainz (DE)

(54) **GLAS- ODER GLASKERAMIKPLATTE UMFASSEND WENIGSTENS EINE AUF EINER SEITE ANGEORDNETE BESCHICHTUNG SOWIE VERFAHREN ZU DEREN HERSTELLUNG**

(57) Die Erfindung betrifft allgemein beschichtete Glas- oder Glaskeramikplatten, welche beispielsweise Einsatz als Abdeckplatten für Kochgeräte finden können. Im Speziellen betrifft die Erfindung Glas- oder Glaskeramikplatten, welche eine auf wenigstens einer Seite des Glas- oder Glaskeramiksubstrats angeordnete Beschichtung umfassen, sowie ein Verfahren zu deren Herstellung. Die Beschichtung umfasst eine siliziumorganische Matrix und ein Pigment und weist eine Kratzfestigkeit und weist als Einzelschicht eine sehr gute Kratzfestigkeit sowie eine sehr gute Ölbeständigkeit.

Fig. 1

EP 4 311 811 A1

## Beschreibung

Gebiet der Erfindung

Die Erfindung betrifft allgemein beschichtete Glas- oder Glaskeramikplatten, welche beispielsweise Einsatz als Abdeckplatten für Kochgeräte finden können. Im Speziellen betrifft die Erfindung Glas- oder Glaskeramikplatten, welche eine auf wenigstens einer Seite des Glas- oder Glaskeramiksubstrats angeordnete Beschichtung umfassen sowie ein Verfahren zu deren Herstellung. Die Beschichtung umfasst eine siliziumorganische Matrix und ein Pigment und weist eine Kratzfestigkeit und weist als Einzelschicht eine sehr gute Kratzfestigkeit sowie eine sehr gute Ölbeständigkeit auf.

Hintergrund der Erfindung

Beschichtete Glas- oder Glaskeramikplatten sind bereits seit vielen Jahren als Abdeckplatten für Kochgeräte im Einsatz (beispielsweise bekannt als "Kochflächen" für "Kochfelder"). In den vergangenen Jahren wurden dabei Abdeckplatten umfassend Glas- oder Glaskeramik entwickelt, welche ein transparentes Glas- oder Glaskeramikmaterial umfassen sowie eine auf einer Seite des entsprechenden Glas- oder Glaskeramiksubstrats eine Beschichtung, welche den Durchblick durch das Material verhindert. Diese Beschichtung ist dem Betrachter bzw. Benutzer eines Kochgeräts im eingebauten Zustand abgewandt und wird allgemein auch als Unterseitenbeschichtung oder Rückseitenbeschichtung bezeichnet.

Diese Rückseiten- oder Unterseitenbeschichtungen sind in Montage und Betrieb vielfältigen Anforderungen ausgesetzt, aufgrund ihrer Anordnung auf der Rückseite bzw. Unterseite der Platte allerdings auch bestimmend für deren in Bedienung und Benutzung relevante Stoßfestigkeit. Die Stoßfestigkeit ist dabei die Festigkeit, welche die Platte einer mechanischen Beanspruchung "von oben" bzw. "von vorne" entgegensetzt, und kann anschaulich für den Fall der Verwendung der beschichteten Platte als Abdeckplatte für ein Kochfeld durch das - gegebenenfalls auch unsanfte - Abstellen von Kochgeschirr veranschaulicht werden.

Da es zwischen einem Substrat und einer auf diesem Substrat aufgebrachten Beschichtung, gerade für den Fall von eher niedrigdehnenden Substraten, durchaus zu einem sogenannten "thermal mismatch" kommen kann, also zu einem Unterschied in der thermischen Dehnung, kann es bei rückseitigen Beschichtungen, gerade bei solchen, die gut haften und/oder kratzfest sind, dazu kommen, dass Risse in das Substrat induziert werden (beispielsweise aufgrund einer hohen Einbrandtemperatur und dem resultierenden Mismatch beim Abkühlen des beschichteten Substrats auf Raumtemperatur). Diese Risse können die mechanische Belastbarkeit des Substrats reduzieren. So kann es durch eine auf das Substrat wirkende Zugspannung, verursacht durch eine Belastung von oben, beispielsweise durch auf der Platte platzierten Gegenständen wie Kochgeschirr, leicht zum Versagen des Substrats durch Bruch kommen. Daher ist gerade die Verwendung von glasbasierten Beschichtungen, die ja besonders gut haften, kratzfest sind und auch sonstigen Anforderungen an Dichtigkeit und Reinigbarkeit an sich gut bestehen, als "Rückseitenbeschichtung" oder "Unterseitenbeschichtung" nicht etabliert, gerade bei der Verwendung von Substraten, die selbst eine eher niedrige Dehnung aufweisen, wie bestimmte Glaskeramiken oder Gläser.

Als Rückseiten- oder Unterseitenbeschichtungen kommen daher insbesondere Beschichtungen zum Einsatz, welche eine geringere Haftung als übliche glasbasierte Beschichtungen aufweisen. Vorgeschlagen wurden beispielsweise Beschichtungen auf Basis von Silikonen oder Sol-Gel-Bindemitteln auf Siliziumbasis. Solche Beschichtungen führen nicht zur Ausbildung einer Anschmelz-Reaktionszone wie für übliche glasbasierte Beschichtungen, sodass bereits aus diesem Grund das Risiko einer Rissbildung geringer ist. Allerdings hat dies den Nachteil, dass auch die Haftung dieser Schichten geringer ist. Um die Festigkeit der mit solchen Beschichtungen belegten Platten zu gewährleisten, ist es weiterhin häufig von Vorteil, wenn gerade zum Substrat hin die Beschichtung porös ausgebildet ist. Diese Porosität ist aber wiederum gerade nachteilig, weil eine Unter- bzw. Rückseite einer Abdeckplatte sehr häufig in Kontakt mit fluiden Medien kommt, seien es Kleberrückstände, Wasserdampf oder auch Öl oder - für den Fall von Abdeckplatten, welche beispielsweise in einem gasbrennerbetriebenen Kochfeld zum Einsatz kommen - verschüttetes Kochgut, das durch die Bohrungen der Gasbrenner hindurch auf die Unterseite der Abdeckplatte gelangt. Ein weiterer Nachteil von porösen Schichten ist in der Regel ihre niedrige Kratzfestigkeit. Eine entsprechende Beschichtung ist beispielsweise in der deutschen Patentanmeldung DE 10 2008 031 428 A1 beschrieben.

Aus diesem Grund ist auf der eigentlich farbgebenden ersten Schicht, die für den Benutzer durch das Substrat hindurch sichtbar ist, häufig noch eine weitere Beschichtung angeordnet, welche auch als "Versiegelung" bezeichnet wird. Diese zweite Beschichtung ist häufig anders zusammengesetzt als die erste Beschichtung und kann andere Einbrandbedingungen benötigen. Es ist auch möglich, dass die erste Beschichtung und die zweite Beschichtung einen unterschiedlichen Farbort aufweisen. Dies ist gerade dann ungünstig, wenn die erste Beschichtung sehr hell ist, die zweite Beschichtung aber sehr dunkel. Die erste Beschichtung ist in diesem Fall besonders dick aufzutragen, oder die zweite Beschichtung schimmert durch die erste Beschichtung hindurch und verändert deren Farbort. Entsprechende Beschichtungen sind beispielsweise in der deutschen Patentanmeldung DE 10 2008 031 426 A1 beschrieben.

Die Kombination einer farbgebenden Schicht mit einer Versiegelungsschicht bedeutet zudem einen zusätzlichen Applikations-, als auch Temperschritt und ist somit nachteilig aus wirtschaftlicher Sicht und hinsichtlich der $CO_2$-Bilanz des Produkts.

Beispielsweise beschreibt die europäische Patentschrift EP 1 730 085 B1 eine Platte, welche aus Glas- oder Glaskeramik besteht, und eine farbige Beschichtung in wenigstens einem Bereich wenigstens einer Seite aufweist, wobei die Beschichtung wenigstens eine Polysiloxanharz umfasst, welches fast frei von kohlenstofffreien Materialien ist und wobei die Beschichtung einen Füllstoffgehalt zwischen 10 und 60 Vol.-% aufweist. Nachteilig hieran ist die wesentliche Kohlenstofffreiheit der Beschichtungen nach dieser Patentschrift, denn auf diese Weise können keine hinreichend dichten Beschichtungen erhalten werden, insbesondere nicht hinsichtlich einer Beständigkeit gegen den Durchtritt von Öl.

Die internationale Patentanmeldung WO 2005/092810 A2 beschreibt eine Verfahren zur Erhöhung der Festigkeit einer Glas- oder Glaskeramikplatte. Eine farbige Beschichtung, welche eine hohe Beständigkeit gegen den Durchtritt von Öl aufweist, ist nicht beschrieben.

Die japanische Anmeldung JP 2011/216457 A1 beschreibt eine Platte umfassend ein Substrat aus Glas oder Glaskeramik, wobei diese Platte eine Unterseitenbeschichtung umfassend unterschiedliche Beschichtungen aufweist. Insbesondere wird die farbgebende Beschichtung 3 anders aufgebaut als eine hitzebeständige Harzschicht 4, und es ist weiterhin möglich, dass noch eine weitere Harzschicht 5 aufgebracht ist, welche die Performance der ersten Harzschicht 4 nochmals verbessert. Die beschrieben Platte weist mithin einen sehr komplizierten Schichtaufbau auf, bei welchem beispielsweise Verfahren wie Sputtern oder auch glasbasierte Beschichtungen zum Einsatz kommen können.

Das japanische Patent JP 6 231 066 B2 beschreibt ein Erzeugnis, wo auf ein Glas- oder Glaskeramiksubstrat eine Beschichtung umfassend ein Silikonharz aufgebracht wird, welches Alkylketten aufweist, die verzweigt sein können. Ein solches Vorgehen ist nachteilig, denn diese organischen Bestandteile müssen bei recht hohen Temperaturen eingebrannt werden, beispielsweise von Temperaturen um 350°C. Auf diese Weise lassen sich aber keine gleichzeitig dichten und kratzfesten Beschichtungen herstellen. Denn durch den Ausbrand der organischen Bestandteile entsteht eine poröse Schicht.

Auch das japanische Patent 206 024 B2 beschreibt eine beschichtete Glasplatte umfassend zwei unterschiedlich zusammengesetzte Beschichtungen, eine dekorative Beschichtung und eine lichtabschirmende Beschichtung. Die dekorative Beschichtung umfasst neben $SiO_2$ als wesentlicher Komponente noch ein weiteres Metalloxid wie MnO und/oder CoO.

Die japanische Anmeldung JP 2019/519458 A1 beschreibt eine Beschichtung auf einer Glas- oder Glaskeramikplatte umfassend ein Silikonbindemittel und ein Nanopigment. Über die Kratzfestigkeit und die Dichtigkeit der Beschichtung ist keine Aussage getroffen.

Auch die europäische Patentanmeldung EP 3 511 631 A1 beschreibt einen Mehrschichtaufbau umfassend eine erste dekorative Schicht und eine zweite, hitzebeständige Harzschicht. Diese Schicht umfasst Pigmente mit einer sehr kleinen Partikelgröße. Die Harzschicht kann auch direkt auf das Substrat aufgebracht sein. Eine Aussage über die Ölbeständigkeit der Beschichtung wird nicht getroffen.

Die europäische Anmeldung EP 3 222 595 A1 beschreibt eine Kochfeldvorrichtung umfassend ein teilweise transluzentes Schichtelement. Aussagen über die Öldichtigkeit und Kratzfestigkeit werden nicht getroffen.

Die internationale Patentanmeldung WO 2020/122069 A1 beschreibt eine Kochplatte umfassend eine hitzebeständige Harzschicht. Diese umfasst einen plättchenförmigen anorganischen Füllstoff, insbesondere umfassend Aluminiumoxid. Auch hier wird keine Aussage zur Ölbeständigkeit getroffen.

Mit anderen Worten sind bestehende, rückseitig beschichtete Glas- oder Glaskeramikplatten in der Herstellung anspruchsvoll und aufwendig. Es besteht daher ein Bedarf an Glas- oder Glaskeramikplatten, welche diese vorgenannten Schwächen des Standes der Technik zumindest teilweise mindern. Ebenso besteht ein Bedarf an einem Verfahren zu deren Herstellung.

## Aufgabe der Erfindung

Die Aufgabe der Erfindung besteht in der Bereitstellung von Glas- oder Glaskeramikplatten umfassend wenigstens eine auf wenigstens einer Seite angeordnete Beschichtung, welche die Schwächen des Standes der Technik zumindest teilweise mindern, sowie in einem Verfahren zu deren Herstellung.

## Zusammenfassung der Erfindung

Diese Aufgabe wird gelöst durch den Gegenstand der unabhängigen Ansprüche. Bevorzugte und spezielle Ausführungsformen sind Gegenstand der abhängigen Ansprüche sowie der Beschreibung und der Zeichnungen der vorliegenden Offenbarung.

Die vorliegende Offenbarung betrifft daher eine Glas- oder Glaskeramikplatte umfassend ein Glas- oder Glaskeramiksubstrat und eine auf wenigstens einer Seite des Glas- oder Glaskeramiksubstrats angeordnete Beschichtung umfassend eine siliziumorganische Matrix und ein Pigment. Die Beschichtung weist eine Dicke von wenigstens 10 μm auf sowie vorzugsweise von höchstens 80 μm. Die Beschichtung weist in einem Bereich der Glas- oder Glaskeramikplatte, in welchem nur die Beschichtung auf dem Glas- oder Glaskeramiksubstrat angeordnet ist, eine Kratzfestigkeit von mehr als 7 N, bestimmt in einem Test nach DIN ISO 1518-1, und bevorzugt höchstens 30 N auf sowie eine Beständigkeit gegen Öl, bestimmt als Farbortänderung ΔE, von kleiner 1, bevorzugt kleiner 0,5, besonders bevorzugt kleiner 0,3, ganz besonders bevorzugt kleiner 0,2 und am meisten bevorzugt kleiner 0,1, bestimmt durch das Glas- oder Glaskeramiksubstrat hindurch, wobei die Farbortänderung ΔE bestimmt wird im L*a*b*-System gegeben ist durch die folgende Formel:

$$\Delta E = \sqrt{(L_1^* - L_2^*)^2 + (a_1^* - a_2^*)^2 + (b_1^* - b_2^*)^2}.$$

Hier bezieht sich der Farbort 1 auf den Farbort der Glas- oder Glaskeramikplatte, bestimmt durch das Glasoder Glaskeramiksubstrat hindurch, vor einer Belastung mit einem eingefärbten Öl, und der Farbort 2 auf den Farbort nach Belastung mit einem eingefärbten Öl.

Der Test wird vorzugsweise folgendermaßen durchgeführt:

Die Einfärbung eines Öls erfolgt vorzugsweise mittels eines blauen Farbstoffs, wie er beispielsweise unter dem Handelsnamen Orasol Blue 855 verkauft wird. Es handelt sich dabei allgemein um einen Farbstoff aus einem Kupfer-Phthalocyanin-Komplex, der auch als C.I. Solvent Blue 70 (CAS No. 12237-24-0) bezeichnet wird. Dazu werden zunächst in 10 ml Isopropanol 0,5 g des pulverförmigen Farbstoffs aufgelöst. Die Lösung wird anschließend mit einem handelsüblichen Öl, beispielsweise Sonnenblumenöl, auf 50 ml aufgefüllt.

Ein Zusammensetzungsbereich für ein solches handelsübliches Sonnenblumenöl, welches für den Test geeignet ist, ist in der folgenden Aufstellung zu finden (siehe auch de.wikipedia.org/wiki/Sonnenblumenöl vom 04. Mai 2022):

| Inhaltsstoffe | |
|---|---|
| Ölsäure | 14-39 Gew.-% |
| Linolsäure | 48-74 Gew.-% |
| Linolensäure | 0-0,3 Gew.-% |
| Palmitinsäure | 5-8 Gew.-% |
| Weitere Fettsäuren | 3-6 Gew.-% Stearinsäure |

Anschließend wird der Prüfkörper bereitgestellt. Es handelt sich dabei um einen Prüfling aus einer beschichteten Glas- oder Glaskeramikplatte mit einer Mindestabmessung von 80*80 mm². Vorzugsweise umfasst der Prüfling lediglich das Substrat sowie die zu testende Beschichtung. Der Farbort der Beschichtung wird vor Belastung bestimmt, und zwar durch das Substrat hindurch. Auf die Beschichtung werden dann 2 ml eines wie vorstehend ausgeführt gefärbten Speiseöls, vorzugsweise eines handelsüblichen Sonnenblumenöls, gegeben und die solcherart mit gefärbtem Öl versehene Probe wird dann für 3 Stunden in einem Ofen bei 150°C getempert. Anschließend wird der Farbort der Beschichtung durch das Substrat hindurch erneut bestimmt. Die Farbortbestimmung erfolgt jeweils mittels eines Farbmessgeräts und wird im CIE-L*a*b*-System angegeben. Die Farbortänderung ΔE wird dann anhand der Messungen vor und nach Belastung bestimmt. Es ist auch möglich und kann bei großen Proben auch bevorzugt sein, dass der Farbort an einer unbehandelten und an einer mit Öl behandelten Stelle der Probe bestimmt und daraus die Farbortänderung bestimmt wird. Dies ist möglich, weil die Temperatur der Temperaturbehandlung von 150°C zu gering ist, um bereits zu einer Farbortänderung der Beschichtung selbst zu führen. Der Farbort der unbehandelten Stelle entspricht also im Rahmen der Messgenauigkeit dem Farbort vor der Behandlung. Um etwaige Fehler und Artefakte auszuschließen, kann auch eine Referenzprobe mitgetempert werden, um Artefakte zu vermeiden, beispielsweise wenn es zu einer Kontamination der Proben im Ofen selbst gekommen ist.

Allgemein kann vorteilhaft wie folgt vorgegangen werden:

Auf die Seite der Platte/des Substrats, auf welcher die Beschichtung angeordnet ist, wird vorzugsweise ein Ring, vorzugsweise aus oder umfassend einen handelsüblichen Edelstahl, mit einem Innendurchmesser von 40 mm gelegt. Der Außendurchmesser kann beispielsweise 57 mm sein, wobei die genauen Abmessungen des Außendurchmessers lediglich beispielhaft zu verstehen sind. Der Ring dient insbesondere als Begrenzung zum Verhindern eines unkontrollierten Auslaufens des Öls. In den Ring werden dann 2 ml des eingefärbten Öls gegeben, vorzugsweise durch Träufeln mittels einer Pipette. Der Ring wird dann abgedeckt, beispielsweise mit einem Uhrglas, um ein schnelles Verdampfen des Öls zu unterbinden. Die mit gefärbtem Öl versehene Probe wird dann in einen Laborofen gestellt, der anschließend auf 150°C aufgeheizt wird. Die Temperatur von 150° wird drei Stunden gehalten. Nach dem Abkühlen der Probe werden Ring und Abdeckung abgenommen und das noch auf der Oberfläche der Beschichtung vorhandene restliche Öl mit einem Tuch, beispielsweise aus Zellstoff, entfernt.

Vorzugsweise ist das Öl nach der Temperaturbehandlung noch flüssig und nicht klebrig, was auf eine zu hohe Temperatur des Ofens schließen lassen könnte.

Die Probe wird sodann umgedreht und von der Substratseite her bewertet. Zunächst erfolgt eine visuelle Bewertung. Weiterhin wird mittels eines Farbmessgeräts der Farbort im CIEL*a*b*-System durchgeführt. Dafür wird der Farbort an einer unbehandelten Stelle des Prüflings und an einer behandelten Stelle bestimmt und die Farbortänderung ΔE nach der vorstehenden Probe berechnet. Weiterhin wird vorzugsweise auch eine Referenzprobe ohne Behandlung miterfasst.

Vorzugsweise erfolgt die Farbortbestimmung mit dem Gerät CM 700d der Firma Konica-Minolta, einem Spektrophotometer unter Verwendung der Lichtart D65 und mit einem Beobachtungswinkel von 10°. Verwendet werden kann die Messblende MAV sowie die Messeinstellung SCI. Da die Prüflinge eine große Opazität aufweisen, ist die Messung unabhängig vom Hintergrund, es ist also unerheblich, ob gegen eine Schwarzfalle oder einer Weißfalle gemessen wird.

Unter einer Platte wird im Rahmen der vorliegenden Offenbarung ein Formkörper verstanden, dessen Dicke wenigstens eine Größenordnung geringer ist als seine Länge und Breite. Weiterhin wird unter einer Glas- oder Glaskeramikplatte im Rahmen der vorliegenden Offenbarung ein Erzeugnis verstanden, welches ein Glas- oder Glaskeramiksubstrat umfasst, wobei das Glas- oder Glaskeramiksubstrat selbst plattenförmig ausgebildet ist. Im Gegensatz zum Glas- oder Glaskeramiksubstrat umfasst die Glas- oder Glaskeramikplatte noch wenigstens eine Beschichtung und kann daher auch als veredeltes Substrat verstanden werden. Die räumlichen Abmessungen und die Seiten des Glas- oder Glaskeramiksubstrats sowie der Glas- oder Glaskeramikplatte entsprechen einander weitgehend, wobei hier angemerkt sei, dass die Dicke der Glas- oder Glaskeramikplatte strenggenommen um die Dicke der Beschichtung größer ist als die Dicke des (unbeschichteten) Glas- oder Glaskeramiksubstrats. Dies ist allerdings bei üblichen Dicke von hier betrachteten Glass- der Glaskeramikplatten/-substraten im Bereich von mm im Rahmen der Messgenauigkeit vernachlässigbar.

Eine solche Ausgestaltung einer Glas- oder Glaskeramikplatte wie vorstehend ausgeführt weist eine Reihe von Vorteilen auf.

Die Beschichtung ist vorliegend als Beschichtung ausgestaltet, welche eine siliziumorganische Matrix umfasst sowie ein Pigment, mithin also als deckende oder zumindest teilweise deckende Beschichtung. Unter einer deckenden oder zumindest teilweise deckenden Beschichtung (oder Schicht) werden im Rahmen der vorliegenden Offenbarung Beschichtungen verstanden, welche die Lichttransmission durch sie hindurch zumindest mindert. Dies ist zum einen darauf zurückzuführen, dass die Beschichtung ein Pigment umfasst, also einen Farbkörper, vorzugsweise einen temperaturstabilen und/oder keramischen Farbkörper, welcher durch Absorption und/oder Streuung die Lichttransmission verringert. Zum anderen ist die Deckwirkung der Beschichtung auch auf deren dicke zurückzuführen, denn die Beschichtung weist eine Dicke von wenigstens 10 μm auf. Unter einem Farbkörper werden im Rahmen der vorliegenden Offenbarung nicht nur Farbpigmente verstanden, sondern auch Effektpigmente, welche selbst nicht notwendig gefärbt vorliegen müssen, sondern beispielsweise auch als rein silbrig-glänzendes Pigment (entsprechend beispielsweise den sogenannten "Perlglanz-Pigmenten") ausgebildet sein können. Allgemein werden diese Effektpigmente, welche, wie ausgeführt, nicht durch Absorption selbst eine Färbung aufweisen müssen, werden im Rahmen der vorliegenden Offenbarung unter den Oberbegriff des Farbkörpers subsumiert.

Auf diese Weise wird auch bei Pigmenten bzw. Beschichtungen, welche inhärent keine besonders starke Deckwirkung haben, beispielsweise, weil es sich um ein Effektpigment auf Basis eines transparenten Plättchens handelt (beispielsweise Perlglanzpigmente, wie sie beispielsweise unter der Marke "Iriodin" kommerziell erhältlich sind) bzw. eine Beschichtung umfassend eine große Menge eines solchen Pigments, eine deckende Wirkung erreicht. Hier wirkt eine hohe Schichtdicke von wenigstens 10 μm vorteilhaft mit dem oder den von der Beschichtung umfassten Pigmenten zusammen, sodass eine ausreichende Abdeckwirkung der Beschichtung gewährleistet werden kann.

Unter Perlglanzpigmenten werden allgemein Effektpigmente auf Glimmerbasis verstanden. Insbesondere kann der Glimmer plättchenförmig vorliegen und beschichtet sein, wobei die Beschichtung selbst eine nicht-absorbierende Beschichtung sein kann, beispielsweise eine Beschichtung aus oder umfassend $TiO_2$. Auf diese Weise kann beispielsweise ein silbermatter Glanz erzielt werden. Es ist auch möglich, dass ein solches Perlglanzpigment mehrere Beschichtungen umfasst, sodass ein Interferenzeffekt entsteht. Hier kann beispielsweise in Reflexion ein bestimmter Farbeindruck realisiert werden. Auch ist es möglich, dass ein Beschichtungsmaterial verwendet wird, welches selbst eine gewisse Eigenfärbung aufweist, beispielsweise $Fe_2O_3$. Das resultierende Perlglanzpigment weist in diesem Fall einen leichten Farbstich auf, ist aber noch immer kein deckendes Absorptionspigment. Beispielsweise sind Perlglanzpigmente mit gelbem bzw. goldenem Farbort bekannt. Auch andere Farborte sind prinzipiell möglich, beispielsweise violett.

Perlglanzpigmente werden im Rahmen der vorliegenden Offenbarung auch als Glimmerpigmente bezeichnet.

Die Beschichtung umfasst neben wenigstens einem Pigment eine siliziumorganische Matrix. Unter einer siliziumorganischen Matrix wird eine Beschichtungsmatrix - welche aus als "Bindemittel" bezeichnet werden kann - verstanden, welche aus einem siliziumorganischen Vorläufermaterial erhalten wurde. Bekannte siliziumorganische Vorläufermaterialien umfassen beispielsweise TEOS (Tetraethylorthosilikat), TMOS (Tetramethylorthosilikat) oder deren organisch modifizierten Derivate (m-TEOS, Methyl-triethylorthosilikat, DMDEOS, Dimethyldiethylorthosilikat, Phenyltriethylorthosilikat, usw.). Auch Silikone und Polysiloxane werden im Rahmen der vorliegenden Offenbarung als mögliche Bestandteile eines siliziumorganischen Bindemittels gezählt. Das siliziumorganische Bindemittel nach der vorliegenden Offenbarung kann dabei insbesondere mehrere Vorläufermaterialien umfassen. Insbesondere ist es möglich, dass das Bindemittel einen Sol-Gel-Bestandteil und einen Polysilsesquioxan- oder Silikonharz-Bestandteil umfasst.

Die Beschichtung ist selbst kratzfest aufgebaut, d.h. weist als Einzelschicht auf einem Glas- oder Glaskeramiksubstrat eine Kratzfestigkeit von mehr als 7N in einem Test nach DIN-ISO 1518-1 auf.

Allgemein werden im Rahmen der vorliegenden Offenbarung Materiallagen, welche durch einen Beschichtungsschritt auf eine Unterlage aufgebracht werden, als Beschichtungen oder Schichten bezeichnet.

Unter einer Einzelschicht wird im Rahmen der vorliegenden Offenbarung eine Beschichtung oder eine Schicht gleicher Zusammensetzung verstanden. Dabei ist es möglich, dass die Beschichtung in mehreren Beschichtungsschritten oder in einem einzelnen Beschichtungsschritt aufgebracht ist. Beispielsweise kann eine Einzelschicht im Rahmen der vorliegenden Offenbarung auch durch zwei oder mehrere nacheinander erfolgte Beschichtungsvorgänge erhalten werden, beispielsweise durch einen Doppeldruck. Dies kann beispielsweise vorteilhaft sein, wenn es sich um nur wenig deckende Beschichtungen handelt, die in einem einzelnen Beschichtungsvorgang, beispielsweise in einem Siebdruck, auch nur zu einer geringen Schichtdicke führen. Eine solche Beschichtung kann auch als umfassend zwei Teilschichten gleicher Zusammensetzung aufgefasst werden. Hier können vorteilhaft nach einem ersten Beschichtungsvorgang, beispielsweise einem ersten Druck, noch wenigstens ein oder auch weitere Beschichtungsvorgänge erfolgen, sodass insgesamt eine ausreichend dicke Beschichtung erhalten wird. Hier ist es auch möglich, aber nicht zwingend erforderlich, nach einem Beschichtungsvorgang einen Zwischenschritt, beispielsweise eine thermische Fixierung der vorangegangenen Beschichtung, vorzunehmen.

Im Gegensatz zu Einzelschichten stehen im Rahmen der vorliegenden Offenbarung Schichten (oder Beschichtungen), welche Materiallagen unterschiedlicher Zusammensetzung umfassen, beispielsweise hinsichtlich der Art des oder der verwendeten Pigmente oder des verwendeten Bindemittels. Das Bindemittel kann im Rahmen der vorliegenden Offenbarung auch als Bindemittelphase oder Matrix bezeichnet werden, insbesondere für den Fall, dass nicht von der Paste gesprochen wird, sondern von der ausgehärteten Beschichtung.

Die vorliegende Beschichtung auf einer Glas- oder Glaskeramikplatte weist zusätzlich auch eine sehr gute Beständigkeit in einem Öltest auf.

Im Rahmen der vorliegenden Offenbarung wird unter einem Öltest ein Test verstanden, bei welchem die Durchlässigkeit der Beschichtung gegenüber Öl untersucht wird. Die Sichtbarkeit von Fluiden, die in eine Beschichtung eindringen und dann durch das beschichtete Substrat hindurch sichtbar sind, ist gerade im Falle von Beschichtungen, welche beispielsweise Effektpigmente umfassen, ein komplexes Thema. Denn es hat sich gezeigt, dass je nach genauer Zusammensetzung der Beschichtung, gerade wenn die Beschichtung Effektpigmente umfasst, das Eindringen eines Fluids teilweise nur unter bestimmten Winkeln überhaupt sichtbar ist. Dies ist anders als beispielsweise bei Beschichtungen, welche als reine "Körperfarben", also ohne oder nur mit sehr wenigen Effektpigmenten, ausgebildet sind. Hier ist das Eindringen beispielsweise von Wasser in Beschichtungsporen sehr leicht sichtbar, da durch das Auffüllen der Poren die Farbe dunkler erscheint.

Die Erfinder haben daher die vorstehend beschriebene Testmethode entwickelt, um die Dichtigkeit der Beschichtung zu testen, und verwenden dafür wie ausgeführt ein mit einem Farbstoff versehenes Öl. Ist die Beschichtung nicht hinreichend dicht ausgebildet, dringt das Öl nämlich mitsamt diesem zugesetzten Farbstoff in die Beschichtungsporen ein und kann auch auf der "anderen Seite", also der Seite der Beschichtung, die an das Substrat angrenzt, visuell wahrgenommen werden, nämlich in Form einer Farbänderung, die mittels Farbortmessungen vor und nach der Belastung mit dem gefärbten Öl durchgeführt wird. Die Farbortänderung $\Delta E$ ist hier bei den Beschichtungen nach Ausführungsformen nicht größer als 2, vorzugsweise noch geringer und insbesondere vorzugsweise mit anderen Worten nicht wahrnehmbar. Die Beschichtung wird also als hinreichend dicht ausgebildet erachtet.

Eine solche Ausgestaltung, bei welchem eine Einzelschicht sowohl kratzfest als auch nicht infiltrierbar ist, war zuvor nicht bekannt. Vielmehr war man zuvor davon ausgegangen, dass wenigstens zwei Beschichtungen notwendig sind, welche unterschiedlich zusammengesetzt sind, beispielsweise durch unterschiedliche Pigment- oder Bindemittelgehalte oder durch unterschiedlichen Einbrandbedingungen. Die erste, direkt auf dem Substrat angeordnete Beschichtung war porös ausgebildet, insbesondere auch durch einen Einbrand bei einer erhöhten Temperatur, die zweite, auf der ersten Beschichtung angeordnete Beschichtung, war dicht ausgebildet, wobei hier insbesondere auf einen thermischen Einbrand bei erhöhten Temperaturen von mehr als 300°C oder 350°C verzichtet wurde. Diese bekannten Glas- oder Glaskeramikplatten des Standes der Technik umfassen also einen sogenannten Zweischichter, bei welchem erste und zweite Beschichtung hinsichtlich ihrer Zusammensetzung, der Einbrandbedingungen und ggf. des resultierenden Farbeindrucks aufeinander abzustimmen sind. Nur auf diese Weise konnte es ermöglicht werden, eine ausreichende Kratzfestigkeit bei gleichzeitig ausreichender Dichtigkeit sowie ausreichender mechanischer Festigkeit der resultierenden Glas- oder Glaskeramikplatte unter Einsatzbedingungen zu gewährleisten.

Die Erfinder vermuten, dass die Kratzfestigkeit und gleichzeitige Dichtigkeit der offenbarten Einzelschicht auf eine spezielle Ausgestaltung des verwendeten Bindemittels zurückzuführen ist. So umfasst das Beschichtungsmittel, welches zur Herstellung der Glas- oder Glaskeramikplatte nach Ausführungsformen verwendet wird, ein Bindemittel, welches wenigstens zwei siliziumorganische Precursoren oder Vorläufer umfasst. Der eine siliziumorganische Precursor ist ein Silikonharz, insbesondere ein Silikonharz, welches kommerziell erhältlich ist, und der andere siliziumorganische Precuros ist ein Sol-Gel-Hydrolysat. Neben dem Bindemittel umfasst das Beschichtungsmittel noch wenigstens ein Pigment.

Diese Ausgestaltung ist sehr vorteilhaft. Durch die Verwendung eines Sol-Gel-Hydrolysats einer siliziumorganischen Verbindung oder eines Gemischs von siliziumorganischen Verbindungen ist es nämlich sehr einfach möglich, die vorteilhaften Eigenschaften einer nicht zu stark, jedoch ausreichend, haftfesten pigmentierten Beschichtung einzustellen. Solche Beschichtungen sind jedoch, wie sich gezeigt hat, nicht für die Ausbildung von Einzelschichten auf Glas- oder Glaskeramiksubstraten zur Verwendung als Rückseiten- oder Unterseitenbeschichtung geeignet. Denn entweder sind diese Schichten zu hoch eingebrannt und daher zu porös, um selbstversiegelnd zu sein (also die sehr gute Ölbeständigkeit nach der vorliegenden Offenbarung aufzuweisen), oder sie sind nicht eingebrannt, sondern nur getrocknet, sind damit nicht ausreichend temperaturstabil. Denn im späteren Betrieb des damit ausgerüsteten Kochgeräts, also unter thermischer Belastung, würde es dann doch zu einem Einbrennen kommen, sodass im Laufe der Zeit die Dichtigkeit der Beschichtung herabgesetzt würde. Auch weisen nicht eingebrannte Beschichtung keine gute Haftfestigkeit und entsprechend auch keine ausreichende Kratzfestigkeit auf.

Auf überraschend einfache Weise ist es nunmehr aber möglich, Glas- oder Glaskeramikplatten bereitzustellen, welche eine Beschichtung umfassen, die bereits in der Ausführung als Einzelschicht kratzfest und versiegelnd ist.

Nach einer Ausführungsform der Glas- oder Glaskeramikplatte weist diese eine Biegefestigkeit, bestimmt in einer Doppelringmethode nach EN 1288-5, von wenigstens 140 MPa und vorzugsweise höchstens 250 MPa (bestimmt als arithmetischer Mittelwert über eine Probengesamtheit von wenigstens 2 Proben) auf. Dies unterstützt die mechanische Stabilität der Glas- oder Glaskeramikplatte auf vorteilhafte Weise. Nach einer Ausführungsform weist die Glas- oder Glaskeramikplatte eine 5%-Fraktile der Biegefestigkeit von wenigstens 100 MPa auf, wobei vorzugsweise wenigstens 18 Proben zur Bestimmung der 5%-Fraktile verwendet werden sollten.

Nach einer Ausführungsform weist die Glas- oder Glaskeramikplatte eine Stoßfestigkeit, bestimmt in einem Kugelfalltest nach UL 858 von wenigstens 45 cm, vorzugsweise wenigstens 60 cm, vorzugsweise wenigstens 70 cm, vorzugsweise wenigstens 80 cm, besonders bevorzugt wenigsten 90 cm, bestimmt als arithmetischer Mittelwert über eine Probengesamtheit von wenigstens 2 Proben, auf, , wobei die Stoßfestigkeit bestimmt wird für eine auf der Unterseite der Glas- oder Glaskeramikplatte angeordnete Beschichtung. Weiterhin weist nach einer Ausführungsform die Glas- oder Glaskeramikplatte eine Stoßfestigkeit, bestimmt in einem Kugelfalltest nach UL 858 von wenigstens 35 cm, vorzugsweise wenigstens 40 cm, besonders bevorzugt wenigstens 45 cm oder mehr, in der 5%-Fraktile auf. Auch für die Bestimmung der Stoßfestigkeit ist die Beschichtung auf der Unterseite der Probe angeordnet, d.h. mit dem Stoß (bzw. im Test dem Kugelfall) wird die Oberseite der Probe bzw. Glas- oder Glaskeramikplatte belastet und die Beschichtung nach Ausführungsformen ist auf der dieser gegenüberliegenden Seite der Probe / der Glas- oder Glaskeramikplatte angeordnet.

Wie bereits zuvor ausgeführt, wird unter der Unterseite der Glas- oder Glaskeramikplatte die Seite der Platte verstanden, welche in der betrieblichen Nutzung der Platte vom Bediener/Betrachter/Benutzer abgewendet ist. Beispielsweise ist es möglich und kann sogar bevorzugt sein, die Unterseite genoppt auszugestalten, denn auf diese Weise ist eine besonders hohe Festigkeit, insbesondere auch Stoßfestigkeit, der Platte einstellbar. Allerdings kann es auch vorgesehen sein, die Platte beidseitig glatt auszugestalten, da so insbesondere die Integration von Anzeigeelementen unterhalb der Platte als Teile eines Bedienelements eines mit der Platte ausgerüsteten Geräts einfacher ist.

Gemäß einer weiteren Ausführungsform der Gas- oder Glaskeramikplatte weist die Glas- oder Glaskeramikplatte, in dem Bereich, in dem die Beschichtung angeordnet ist, einen Lichttransmissionsgrad von weniger als 0,08 %, bevorzugt von weniger als 0,04 % und besonders bevorzugt von weniger als 0,02 % auf, bestimmt nach DIN 5036 Teil 1. Die Angabe des Lichttransmissionsgrades bezieht sich bevorzugt auf einen Bereich, in welchem nur die Beschichtung nach Ausführungsformen auf dem Glas- oder Glaskeramiksubstrat angeordnet ist.

Die Beschichtung ist mit anderen Worten also nahezu blickdicht oder deckend ausgebildet.

Dies kann vorteilhaft durch ein geeignetes Verhältnis von Pigment zu Bindemittel in der Beschichtung unterstützt werden. Nach einer Ausführungsform der Glas- oder Glaskeramikplatte beträgt das Verhältnis von Pigment zu Bindemittel in der Beschichtung 0,8 bis 1,3 beträgt, vorzugsweise 1 : 1 bis 1 : 2,5, besonders bevorzugt 1: 1,3 bis 1 : 2, jeweils bezogen auf den Gewichtsanteil. Auf diese Weise ist vorteilhaft eine gute Deckwirkung der Beschichtung sichergestellt. Weiterhin ist es auf diese Weise aber auch möglich, die Glas- oder Glaskeramikplatte so auszugestalten, dass eine hohe Festigkeit bei gleichzeitig ausreichender Haftfestigkeit der Beschichtung resultiert. Sofern im Rahmen der vorliegenden Offenbarung auf das Verhältnis von "Pigment zu Bindemittel" abgestellt wird, ist hier immer die Summe der von der Beschichtung umfassten Pigmente gemeint. Dabei wird unter Pigment ein Farbkörper, insbesondere ein anorganischer Farbkörper, vorzugsweise ein keramischer, also anorganischenichtmetallischer, Farbkörper verstanden, welcher Partikel umfasst. Es ist möglich und kann beispielsweise zur Einstellung einer bestimmten Farbe und/oder einer der sonstigen Eigenschaften der Beschichtung notwendig sein, dass die Beschichtung mehrere Pigmente umfasst, beispielsweise Pigmente mit unterschiedlichen Farben oder Farbschattierungen. In diesem Fall bezieht sich die Angabe des Pigment-Bindemittelverhältnisses auf die Gesamtsumme der von der Beschichtung umfassten Pigmente, also auf den Gesamtpigmentanteil.

Nach einer weiteren Ausführungsform umfasst die Beschichtung ein Effektpigment, wobei der Anteil des Effektpigments am Gesamtpigmentanteil zwischen 50 Gew.-% und 100 Gew.-% beträgt, bevorzugt zwischen 70 Gew.-% und 100 Gew.-% und besonders bevorzugt zwischen 88 Gew.-% und 98 Gew.-%.

Eine Ausgestaltung der Beschichtung, sodass sie wenigstens ein Effektpigment umfasst, wird in der Regel zur Einstellung einer bestimmten Anmutung vorgenommen ("Metallic-Beschichtung"). Allerdings hat sich gezeigt, dass ein Effektpigment auch andere Funktionen innerhalb der Beschichtung ausüben kann. Denn durch die in der Regel plättchenförmige Ausbildung vieler Effektpigmente, beispielsweise von sogenannten Perlglanzpigmenten, können vorteilhafte Eigenschaften der Beschichtung weiter unterstützt werden, beispielsweise die Ausbildung einer hohen Abriebfestigkeit. Vorteilhaft kann daher vorgesehen sein, dass der Anteil des Effektpigments am Gesamtpigmentanteil nicht zu gering ist und beispielsweise wenigstens 50 Gew.-%, vorzugsweise wenigstens 70 Gew.-% und besonders bevorzugt wenigstens 88 Gew.-% beträgt.

Es ist allgemein möglich, dass die Beschichtung als Farbkörper - bzw. in dem speziellen Fall eines Effektpigments auch eines "Effektkörpers" - lediglich ein Effektpigment umfasst, sodass der Anteil des Effektpigments am Gesamtpigmentanteil auch 100Gew.-% betragen kann. Es kann allerdings vorteilhaft und bevorzugt sein, wenn der Gehalt geringer ist, und beispielsweise lediglich 98 Gew.-% beträgt. Dies kann insbesondere dann vorteilhaft sein, wenn das Effektpigment selbst nicht färbt, sondern beispielsweise ein rein "silberweißes" Perlglanzpigment ist. In diesem Fall wäre nämlich zur Einstellung einer ausreichend großen optischen Dichte der Beschichtung - mit anderen Worten, dass die Beschichtung "deckend" ausgebildet ist - nur durch eine sehr hohe Schichtdicke zu erzielen. Vorteilhaft kann es daher sein, wenn noch wenigstens ein weiteres, durch Absorption und/oder Streuung färbendes Pigment oder gegebenenfalls auch mehrere weitere Pigmente, zugegeben wird, um die Deckwirkung der Beschichtung zu erhöhen. Auch zur Erzielung eines bestimmten Farbeindrucks, insbesondere einer dunklen Färbung, kann es vorteilhaft sein, wenn neben einem Effektpigment wenigstens ein weiteres Pigment, insbesondere ein Absorptionspigment oder ein Weißpigment, von der Beschichtung umfasst ist.

Selbstverständlich ist es auch möglich, dass die Beschichtung kein Effektpigment umfasst.

Wie vorstehend ausgeführt, ist die Beschichtung nach Ausführungsformen als Einzelschicht ausgebildet, und ist bereits als Einzelschicht sowohl kratzfest als auch versiegelnd ausgebildet.

Die Ausbildung der Beschichtung als Einzelschicht bedeutet nicht, dass die Glas- oder Glaskeramikplatte nach Ausführungsformen auf der Seite der Platte, auf welcher auch die Beschichtung angeordnet ist, nur eine einzige Beschichtung umfassen darf. Es ist vielmehr möglich und kann aus verschiedenen Gründen auch bevorzugt sein, wenn eine oder mehrere weitere Beschichtungen auf dieser Seite angeordnet sind. Allerdings sind die weiteren Beschichtungen für die Eigenschaften der ersten Beschichtung nicht bestimmend, sondern können beispielsweise als Funktionsschichten zum Betrieb von elektronischen Komponenten o.ä. aufgebracht sein. Die vorteilhaften Eigenschaften der Beschichtung können dabei in den Bereichen der Glas- oder Glaskeramikplatte bestimmt werden, in welchen nur die Beschichtung selbst angeordnet ist, ohne weitere, zwischen Substrat und Beschichtung oder auf der Beschichtung selbst angeordnete weitere Beschichtungen.

Die Erfinder haben also erstmals die Möglichkeit eröffnet, bereits mit einer Einzelschicht eine als Unter- oder Rückseitenbeschichtung geeignete Beschichtung bereitzustellen. Wie ausgeführt, lässt sich dies vorteilhaft durch die spezielle Ausgestaltung des Beschichtungsmittels in der Art, dass dies zwei siliziumorganische Precursoren umfasst, ermöglichen. Die Erfinder gehen dabei davon aus, dass die Zugabe des Silikonharzes dabei dafür verantwortlich ist, dass eine ausreichende Dichtigkeit gewährleistet ist.

Die Erfindung betrifft daher nach einem Aspekt auch ein Verfahren zum Herstellen einer Glas- oder Glaskeramikplatte nach Ausführungsformen der vorliegenden Offenbarung, welches die folgenden Schritte umfasst:

- Bereitstellen eines Glas- oder Glaskeramiksubstrats,
- Bereitstellen eines Beschichtungsmittels umfassend ein Pigment sowie ein Bindemittel umfassend zwei siliziumorganische Precursoren, wobei der eine siliziumorganische Precursor ein Silikonharz und der andere siliziumorganische Precursor ein Sol-Gel-Hydrolysat ist,
- Auftragen des Beschichtungsmittels auf eine Seite des Glas- oder Glaskeramiksubstrats unter Bildung einer Beschichtung, bevorzugt mittels eines Druckverfahrens,
- Einbrennen der Beschichtung bei einer Temperatur von wenigstens 200°C und höchstens 400°C für wenigstens 10 und höchstens 120 Minuten, bevorzugt bei einer Temperatur von wenigstens 250°C und höchstens 330°C für wenigstens 30 und höchstens 90 Minuten, insbesondere höchstens 60 Minuten, besonders bevorzugt bei einer Temperatur von wenigstens 300°C und höchstens 320°C für wenigstens 30 und höchstens 60 Minuten.

Mittels eines solchen Verfahrens ist nicht nur die Herstellung einer Glas- oder Glaskeramikplatte nach Ausführungsformen möglich, sondern es bietet darüber hinaus auch den Vorteil einer vereinfachten Verfahrensführung. Insbesondere ist der logistische Aufwand verringert, der in der Produktion damit verbunden ist, nach dem Verfahren der vorliegenden Offenbarung deutlich verringert, da nunmehr eine Einzelschicht aufgebracht wird, also logistisch keine unterschiedlichen Pasten vorrätig gehalten werden müssen. Für den Fall, dass der gewünschte Farbort der Beschichtung sehr hell ist, ist es nun auch nicht mehr notwendig, die Änderung des Farborts von oben, also durch das Substrat hindurch, durch eine gegebenenfalls auf die erste, helle Beschichtung aufgebrachte dunklere, aber versiegelnde Schicht zu berücksichtigen. Denn gerade in dieser Kombination hat es zuvor dazu kommen können, dass sich der Farbort der ersten Beschichtung durch die dunklere Hinterdruckung ändern kann, wenn die erste Schicht nicht ausreichend blickdicht war bzw. wenn sie durchscheinend ausgebildet war.

Gemäß einem weiteren Aspekt der vorliegenden Offenbarung betrifft die Erfindung damit auch eine Glas- oder Glaskeramikplatte, hergestellt oder zumindest herstellbar in einem Verfahren nach einer Ausführungsform.

Beispiele

In der folgenden Tabelle sind beispielhaft die Zusammensetzungen dreier Beschichtungsmittel bzw. Pasten angegeben, mit welchem eine Glas- oder Glaskeramikplatte nach Ausführungsformen erhalten wird.

| Farbsystem | 1 [Gew.-%] | 2 [Gew.-%] | 3 [Gew.-%] |
|---|---|---|---|
| Silikonharz | 53,72 | 48,15 | 48,15 |
| Sol-Gel Hydrolysat | 1,96 | 4,76 | 4,76 |
| Lösungsmittel | 10,64 | 12,93 | 12,93 |
| Entschäumer | 0,52 | 0,52 | 0,52 |
| Weißpigment | 3,84 | 0,00 | 0,00 |
| Perlglanzpigment 1 (Interferenzpigment) | 2,88 | 3,08 | 0,00 |
| Graphit | 0,48 | 0,87 | 0,87 |
| Perlglanzpigment 2 (Farbstich gelb/braun) | 0,00 | 0,00 | 14,91 |
| Perlglanzpigment 3 (silberweiß) | 15,06 | 11,83 | 17,39 |
| Perlglanzpigment 4 (silberweiß) | 10,65 | 17,39 | 0,00 |
| Füllstoff | 0,24 | 0,46 | 0,46 |

| Farbsystem nach Applikation und Einbrand auf einer Glaskeramik | 1 | 2 | 3 |
|---|---|---|---|
| Lichttransmissionsgrad [%] | 0,08 | 0,06 | <0,02 |
| Schichtdicke [$\mu$m] | 28 | 30 | 30 |
| Min. Kratzfestigkeit 7N erfüllt | Ja (> 9 N) | Ja (> 9 N) | Ja (> 9 N) |
| $\Delta$E nach Test zur Beständigkeit gegen Öl | 0,13 | 0,15 | 0,05 |
| Mittelwert Biegefestigkeit [MPa] | 210 | 205 | 202 |
| Mittelwert Stoßfestigkeit [cm] | >90 | >90 | 90 |

Die Zusammensetzung der beispielhaften Pasten nach der vorstehenden Tabelle umfasst als feste Bestandteile neben einem Füllstoff hier mehrere Perlglanzpigmente sowie ein Weißpigment und Graphit als dunklen Bestandteil. Diese Bestandteile sind in ihren Anteilen variabel und hier zur Erzielung besonders bevorzugter Farborte eingesetzt worden. Es ist daher auch möglich, andere Perlglanzpigmente zu verwenden oder auch nur ein einziges. Als Weißpigment

kann beispielsweise $TiO_2$ eingesetzt werden. Ein allgemeiner Zusammensetzungsbereich für Beschichtungsmittel bzw. Pasten zur Herstellung von Glas- oder Glaskeramikplatten nach Ausführungsformen ist nachfolgend zusammengestellt: Zusammensetzungsbereiche der offenbarten Beschichtungsmaterialzusammensetzung

| Zusammensetzung/ Farbsystem | Gew% |
|---|---|
| Silikonharz | 40-60 |
| Sol-Gel Hydrolysat | 0,5-10 |
| Lösungsmittel | 5-20 |
| Entschäumer | 0,1-1,5 |
| Weißpigmente | 0-5 |
| Summe Perlglanzpigment | 0-53,9 |
| Weitere Pigmente (z.B. Spinelle) | 0-25 |
| Graphit | 0,5-5 |
| Füllstoff | 0-3 |

Hinsichtlich der Pigmente, also der Weißpigmente, der Perlglanzpigmente und der weiteren Pigmente (welche insbesondere Absorptionspigmente umfassen, wie beispielsweise Spinelle, insbesondere also hochtemperaturstabile oxidische Pigmente) ist jeweils die Summe angegeben. D.h. die Paste bzw. das Beschichtungsmittel kann nur ein Perlglanzpigment oder auch mehrere umfassen, wobei die Summe aller vom Beschichtungsmittel umfassten Perlglanzpigmente dann höchstens 53,9 Gew.-% ist. Entsprechend kann das Beschichtungsmittel ein einziges Weißpigment umfassen oder auch mehrere, wobei die Summe aller Weißpigmente in den vorgenannten Grenzen liegt; entsprechendes gilt für die weiteren Pigmente.

Zusätzlich können außer den Perlglanzpigmenten auch weitere Effektpigmente enthalten sein. Die Summe aus Perlglanz- und weiteren Effektpigmenten darf aber 53,9 Gew.-% nicht überschreiten. Die weiteren Effektpigmente können beispielsweise auf Basis von $Al_2O_3$, $SiO_2$ oder Borosilikatglasplättchen vorliegen und verschiedene Beschichtungen aufweisen. Mit solchen Effektpigmenten kann sowohl die Farbanmutung, als auch weitere Effekte erzielt werden, beispielsweise Glitzern oder ein Metallic Effekt.

Ein Beispiel für eine Zusammensetzung für die Sol-Gel-Hydrolysat-Herstellung findet sich in der folgenden Tabelle:

Sol-Gel Hydrolysat Herstellung

| | | | |
|---|---|---|---|
| 104,16 g | Tetraethoxysilan | 0,500 | mol |
| 178,3 g | Methyltriethoxysilan | 1,000 | mol |
| 1,78 g | para-Touluolsulfonsäure | 0,0093 | mol |
| 9,01 g | H2O | 0,500 | mol |

Die Silane wurden vorgelegt, die p-Toluolsulfonsäure im Wasser gelöst und zugegeben. Nach einer Rührzeit von 1 h wurde das entstandene Ethanol abdestilliert.

Vergleichsbeispiele

| Zusammensetzung/ Farbsystem | V4 [Gew.-%] | V5 [Gew.-%] | V6 [Gew.-%] |
|---|---|---|---|
| Silikonharz | 62,00 | 35,00 | 45,00 |
| Sol-Gel Hydrolysat | 0,00 | 20,00 | 11,00 |
| Lösungsmittel | 11,00 | 12,93 | 10,05 |

(fortgesetzt)

| Zusammensetzung/ Farbsystem | V4 [Gew.-%] | V5 [Gew.-%] | V6 [Gew.-%] |
|---|---|---|---|
| Entschäumer | 0,52 | 0,52 | 0,52 |
| Weißpigment | 3,81 | 0,00 | 0,00 |
| Perlglanzpigment 1 (Interferenzpigment) | 0,00 | 3,08 | 0,00 |
| Graphit | 0,48 | 0,87 | 0,87 |
| Perlglanzpigment 2 (Farbstich gelb/braun) | 0,00 | 0,00 | 14,71 |
| Perlglanzpigment 3 (silberweiß) | 11,30 | 11,83 | 17,39 |
| Perlglanzpigment 4 (silberweiß) | 10,65 | 15,31 | 0,00 |
| Füllstoff | 0,24 | 0,46 | 0,46 |

| Eigenschaften/ Farbsystem nach Applikation und Einbrand auf einer Glaskeramik | 4 | 5 | 6 |
|---|---|---|---|
| Min. Kratzfestigkeit 7N erfüllt | Nein -6N | Ja - 9 N | Ja - 9 N |
| ∆E nach Test zur Beständigkeit gegen Öl | > 1 | > 1 | > 1 |

Beschreibung der Zeichnungen

Die Erfindung wird im Folgenden anhand von Figuren weiter erläutert. Es zeigen:

Fig. 1 rasterelektronenmikroskopische Aufnahmen von Glas- bzw. Glaskeramikplatten umfassend eine Beschichtung,

Fig. 2 fotografische Darstellungen von Glas- bzw. Glaskeramikplatten zur Verdeutlichung der Ölbeständigkeit, sowie

Fig. 3 fotografische Darstellungen von Glas- bzw. Glaskeramikplatten zur Verdeutlichung der Kratzfestigkeit.

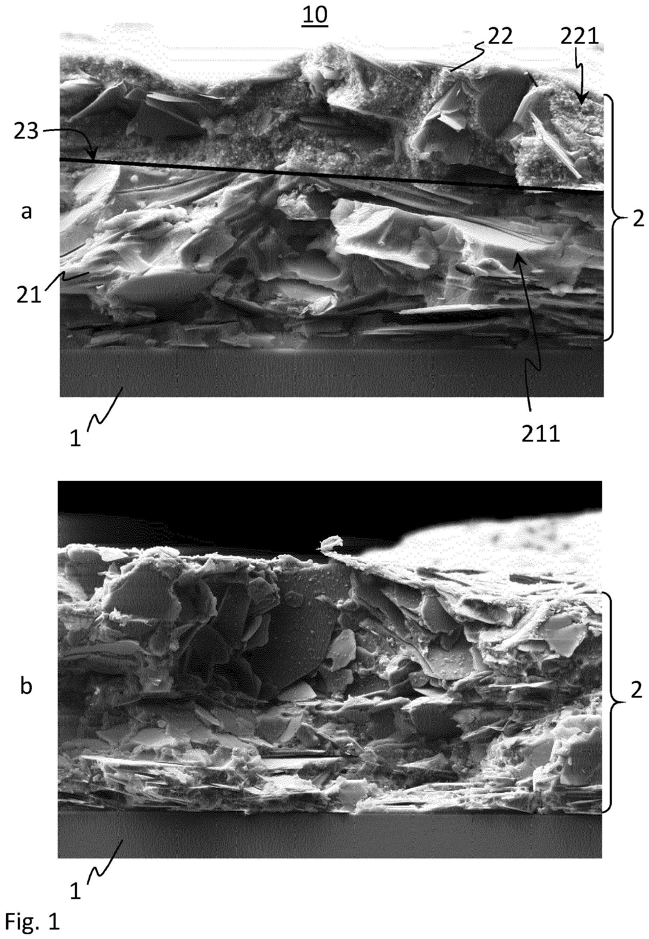

Fig. 1 a zeigt eine rasterelektronenmikroskopische Aufnahme einer Glas- oder Glaskeramikplatte 10 des Standes der Technik, welche eine Beschichtung 2 umfasst, die als Zweischichter aufgebaut ist. Die Glas- oder Glaskeramikplatte 10 ist vorliegend als Glaskeramikplatte ausgebildet, umfasst also ein hier Glaskeramik umfassendes Substrat 1. Die Beschichtung 2 umfasst, wie man deutlich erkennen kann, zwei unterschiedliche Schichten (oder Teilschichten) 22, 21, wobei die eine Schicht 21 zum Substrat 2 hin angeordnet ist und die farbgebende Schicht ist, und die andere Schicht 22 auf der ersten Schicht 21 angeordnet ist. Schematisch wurde in Fig. 1 a die Trennlinie (oder Grenzfläche) 23 zwischen der ersten Schicht 21 und der zweiten Schicht 22 eingezeichnet. Wie der rasterelektronenmikrospischen Aufnahme der Fig. 1 a zu entnehmen ist, weist die zweite, versiegelnde Schicht 22 eine andere Feinstruktur auf, beispielsweise eine Matrix 221, welche körniger ausgebildet ist als die Matrix 211 der Schicht 21.

Demgegenüber steht die Glas- oder Glaskeramikplatte 10 nach einer Ausführungsform der Offenbarung, hier ebenfalls als Glaskeramikplatte ausgebildet, also umfassend ein Glaskeramik umfassendes Substrat 1 umfassend eine Beschichtung 2. Die Beschichtung 2 ist hier als Doppelschicht ausgebildet in der Form, dass zweimal eine Paste verdruckt wurde, welche dieselbe Zusammensetzung aufwies, sodass entsprechend eine zwei Teilschichten umfassende Beschichtung resultiert. Wie ausgeführt, wird eine solche Beschichtung 2 im Rahmen der vorliegenden Offenbarung als Einzelschicht bezeichnet, da die beiden sie aufbauenden Teilschichten eine gleiche Zusammensetzung aufweisen. Die beiden Teilschichten gleicher Zusammensetzung weisen dabei eine sehr gute Haftung aufeinander durch die gleiche Zusammensetzung auf und können im rasterelektronenmikroskopischen Bild der Fig. 1 b nur schwer voneinander unterschieden werden.

Im Gegensatz dazu stehen die Zweischichter, wie sie beispielhaft in Fig. 1 a dargestellt sind, bei welchen eine Schicht 21 und eine Schicht 22 vorliegen, die eine unterschiedliche Zusammensetzung aufweisen.

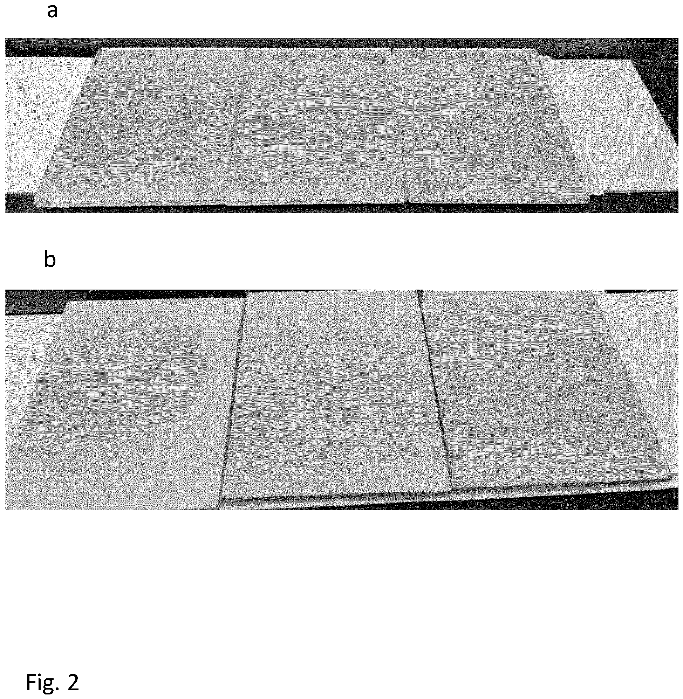

Fig. 2 zeigt fotografische Aufnahmen von Proben von Glas- oder Glaskeramikplatten 10 zur Verdeutlichung der Öltestbeständigkeit. In Fig. 2 b ist die Rückseite der Beschichtungen 2 von unterschiedlichen Platten 10 dargestellt, in Fig. 2 a sieht man dieselben Platten 10, allerdings wurden die Platten hier mit dem Substrat 1 nach oben, also zum Betrachter hin, abgebildet.

In Fig. 2 b sieht man auf den Rückseiten der Prüflinge noch recht deutlich die Rückstände des gefärbten Öls (in Farbe bläulicher Fleck, in der Schwarzweiß-Darstellung des Fotos ein dunkler Schatten). In Fig. 2 a sind die Proben in gleicher Reihenfolge dargestellt wie auf dem Foto von Fig. 2 a, wobei hier allerdings deutliche Unterschiede in der Sichtbarkeit des Öls bestehen: Während die linke Probe einen deutlich erkennbaren Fleck aufweist, welcher auch eine entsprechend hohe Farbortveränderung bedeutet, ist ein Fleck in der mittleren Probe nur noch sehr schwer erkennbar. Bei der Probe ganz rechts ist im Gegensatz zu den beiden anderen Proben durch das Substrat hindurch kein Fleck mehr erkennbar. Dies kann auch durch eine entsprechende Messung der Farborte im behandelten und unbehandelten Vergleich belegt werden, die hier einen Farbortunterschied ΔE von weniger als 2, hier sogar nur 0,22, zeigen.

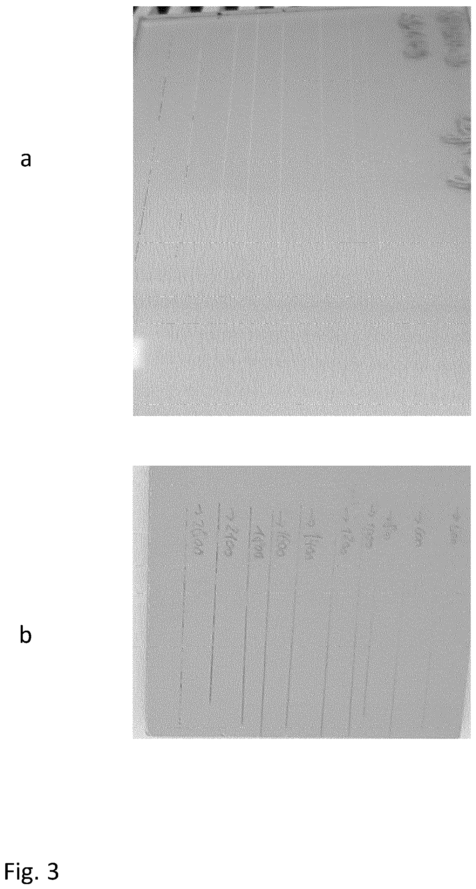

Fig. 3 zeigt zwei fotografische Aufnahmen eines Prüflings, bei welchem ein Kratztest durchgeführt wurde, und zwar DIN-ISO 1518-1. Hierfür wird auf der Seite der Beschichtung und zwar bevorzugt in einem Bereich, in welchem nur die Beschichtung auf dem Substrat aufgebracht ist, eine Prüfspitze mit einer definierten Auflage (definiert über die Auflagekraft) gezogen.

Der Test gilt im Rahmen der vorliegenden Offenbarung als bestanden

- wenn die Spur des Prüfstifts von oben, also bei Betrachtung durch das Substrat hindurch, nicht störend sichtbar ist oder

- wenn es zu keiner Ablösung der Beschichtung gekommen ist.

Vorzugsweise ist keine Spur des Prüfstifts von oben, also durch das Substrat hindurch, sichtbar. Dies ist insbesondere wichtig für Beschichtungen, welche Effektpigmente umfassen. Denn wie man an den Prüfspuren in Fig. 3 a sehen kann, kann es im Falle einer Beschichtung, die einen sogenannten "Metallic-Effekt" hat, dazu kommen, dass bereits vor einem sichtbaren Ablösen der Beschichtung eine Schichtschädigung auftritt, die visuell durch das Substrat hindurch wahrgenommen werden kann. Die Erfinder vermuten, dass dies an einem "Zusammenquetschen" der Effektpigmente liegen könnte, sodass in der visuellen Anmutung durch das Substrat hindurch ein Unterschied zwischen der unbelasteten Beschichtung und dem Bereich der Beschichtung mit Prüfspur wahrnehmbar ist. Bei den Platten nach Ausführungen tritt dies allerdings, anders als bei den Platten des Standes der Technik, wenn überhaupt so erst nach einer Belastung von 7 N oder mehr auf.

Mithin weist die Beschichtung in einem Bereich der Glas- oder Glaskeramikplatte, in dem nur die Beschichtung auf dem Glas- oder Glaskeramiksubstrat angeordnet ist, eine Kratzfestigkeit von mehr als 7 N in einem Test nach DIN-ISO 1518-1 und bevorzugt höchstens 30 N auf.

Vorzugsweise kann die Kratzfestigkeit auch mehr als 16 N betragen, beispielsweise bis zu 17 N oder sogar 18 N, insbesondere wenn auf die Schichtablösung abgestellt wird. Es ist also nach einer Ausführungsform möglich, dass die Kratzfestigkeit 16 N ist oder sogar mehr ist, d.h. nach dieser Ausführungsform bei den genannten Belastungen im Kratztest keine Schichtablösung auftritt.

Eine zu hohe Kratzfestigkeit korreliert allerdings mit einer zu guten Schichthaftung, die bei Beschichtungen, die vorgesehen sind, auf einer vom Benutzer abgewandten Seite der Platte angeordnet zu werden (Unter- oder Rückseitenbeschichtung), nachteilig ist, weil dies zu einer starken Verminderung der mechanischen Beständigkeit der Platte führen kann. daher ist nach einer Ausführungsform vorgesehen, dass die Kratzfestigkeit der Beschichtung höchstens 30 N beträgt.

Im Rahmen der vorliegenden Offenbarung wird dabei unter der Formulierung "in einem Bereich der Glas- oder Glaskeramikplatte, in dem nur die Beschichtung auf dem Glas- oder Glaskeramiksubstrat angeordnet ist" allgemein verstanden, dass in diesem Fall Bezug genommen wird auf die Seite, auf der die Beschichtung angeordnet ist. Auf der anderen Seite der Platte kann beispielsweise noch eine weitere Beschichtung, wie ein keramisches Dekor zur Kochzonenmarkierung, aufgebracht sein. Wichtig für die Kratzfestigkeit und auch die Ölbeständigkeit der Beschichtung ist allerdings, wie dem Fachmann leicht ersichtlich ist, lediglich die Haftung der Beschichtung auf dem Substrat bzw. deren inhärente Dichtigkeit und selbstverständlich nicht eine ggf. auf der gegenüberliegenden Seite der Platte angeordnete weitere Beschichtung wie ein Oberseitendekor.

Bezugszeichenliste

| 1 | Glas- oder Glaskeramiksubstrat |
|---|---|
| 10 | Glas- oder Glaskeramikplatte |
| 2 | Beschichtung |
| 21, 22 | Teilschichten von 2 |

| 23 | Trennlinie/Grenzfläche zwischen 21, 22 |
|----|----------------------------------------|
| 211 | Matrix, Bindemittelphase von 21 |
| 221 | Matrix, Bindemittelphase von 22 |

**Patentansprüche**

1. Glas- oder Glaskeramikplatte umfassend ein Glas- oder Glaskeramiksubstrat und eine auf wenigstens einer Seite des Glas- oder Glaskeramiksubstrats angeordnete Beschichtung umfassend eine siliziumorganische Matrix und ein Pigment, wobei die Beschichtung eine Dicke von wenigstens 10 $\mu$m und vorzugsweise höchstens 80 $\mu$m aufweist und wobei die Beschichtung in einem Bereich der Glas- oder Glaskeramikplatte, in dem nur die Beschichtung auf dem Glas- oder Glaskeramiksubstrat angeordnet ist, eine Kratzfestigkeit von mehr als 7 N in einem Test nach DIN-ISO 1518-1 und bevorzugt höchstens 30 N aufweist sowie eine Beständigkeit gegen Öl, bestimmt als Farbortänderung $\Delta E$, von kleiner 1, bevorzugt kleiner 0,5, besonders bevorzugt kleiner 0,3, ganz besonders bevorzugt kleiner 0,2 und am meisten bevorzugt kleiner 0,1, bestimmt durch das Glas- oder Glaskeramiksubstrat hindurch, wobei die Farbortänderung $\Delta E$ bestimmt wird im L*a*b*-System gegeben ist durch die folgende Formel:

$$\Delta E = \sqrt{(L_1^* - L_2^*)^2 + (a_1^* - a_2^*)^2 + (b_1^* - b_2^*)^2}.$$

2. Glas- oder Glaskeramikplatte nach Anspruch 1, aufweisend eine Biegefestigkeit, bestimmt in einer Doppelringmethode nach EN 1288-5, von wenigstens 140 MPa und bevorzugt höchstens 250 MPa, bestimmt als arithmetischer Mittelwert über eine Probengesamtheit von wenigstens 2 Proben.

3. Glas- oder Glaskeramikplatte nach Anspruch 1 oder 2, mit einer Stoßfestigkeit, bestimmt in einem Kugelfalltest, nach UL 858 von wenigstens 45 cm, vorzugsweise wenigstens 60 cm, vorzugsweise wenigstens 70 cm, vorzugsweise wenigstens 80 cm, besonders bevorzugt wenigsten 90 cm, bestimmt als arithmetischer Mittelwert über eine Probengesamtheit von wenigstens 2 Proben, , wobei die Stoßfestigkeit bestimmt wird für eine auf der Unterseite der Glas- oder Glaskeramikplatte angeordnete Beschichtung.

4. Glas- oder Glaskeramikplatte nach einem der Ansprüche 1 bis 3, wobei die Glas- oder Glaskeramikplatte in dem Bereich, in dem die Beschichtung angeordnet ist, einen Lichttransmissionsgrad von weniger als 0,08 %, bevorzugt von weniger als 0,04 % und besonders bevorzugt von weniger als 0,02 % aufweist, bestimmt nach DIN 5036 Teil 1.

5. Glas- oder Glaskeramikplatte nach einem der Ansprüche 1 bis 4, wobei das Verhältnis von Pigment zu Bindemittel in der Beschichtung 1 : 0,8 bis 1 : 3 beträgt, vorzugsweise 1 :1 bis 1 : 2,5, besonders bevorzugt 1: 1,3 bis 1 : 2, jeweils bezogen auf den Gewichtsanteil.

6. Glas- oder Glaskeramikplatte nach einem der Ansprüche 1 bis 5, wobei die Beschichtung ein Effektpigment umfasst und wobei der Anteil des Effektpigments am Gesamtpigmentanteil zwischen 50 Gew.-% und 100 Gew.-% beträgt, bevorzugt zwischen 70 Gew.-% und 100 Gew.-% und besonders bevorzugt zwischen 88 Gew.-% und 98 Gew.-%.

7. Verfahren zum Herstellen einer Glas- oder Glaskeramikplatte, insbesondere einer Glas- oder Glaskeramikplatte nach einem der Ansprüche 1 bis 6, umfassend die Schritte

   - Bereitstellen eines Glas- oder Glaskeramiksubstrats,
   - Bereitstellen eines Beschichtungsmittels umfassend ein Pigment sowie ein Bindemittel umfassend zwei siliziumorganische Precursoren, wobei der eine siliziumorganische Precursor ein Silikonharz und der andere siliziumorganische Precursor ein Sol-Gel-Hydrolysat ist,
   - Auftragen des Beschichtungsmittels auf eine Seite des Glas- oder Glaskeramiksubstrats unter Bildung einer Beschichtung, bevorzugt mittels eines Druckverfahrens,
   - Einbrennen der Beschichtung bei einer Temperatur von wenigstens 200°C und höchstens 400°C für wenigstens 10und höchstens 120 Minuten, bevorzugt bei einer Temperatur von wenigstens 250°C und höchstens 330°C für wenigstens 30 und höchstens 90 Minuten, insbesondere höchstens 60 Minuten, besonders bevorzugt bei einer Temperatur von wenigstens 300°C und höchstens 320°C für wenigstens 30 und höchstens 60 Minuten.

8. Verfahren nach Anspruch 7, wobei das Verhältnis des Sol-Gel-Hydrolysats zum Silikonharz im Beschichtungsmittel zwischen 1 : 0,2 und 1 : 0,02, bevorzugt zwischen 1 : 0,09 bis 1 : 0,035, bezogen auf das Gewicht, beträgt.

9. Glas- oder Glaskeramikplatte, insbesondere Glas- oder Glaskeramikplatte nach einem der Ansprüche 1 bis 6, hergestellt oder herstellbar in einem Verfahren nach einem der Ansprüche 7 oder 8.

## 10

Fig. 1

a

b

Fig. 2

a

b

Fig. 3

Europäisches Patentamt

European Patent Office

Office européen des brevets

## EUROPÄISCHER RECHERCHENBERICHT

**Nummer der Anmeldung**

**EP 23 18 3883**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2020 001408 U1 (SCHOTT AG [DE]) 29. Mai 2020 (2020-05-29) * das ganze Dokument * * insbesondere Abschnitt "Beispiele" ([0116]-[0119]) * ----- | 1-9 | INV. C03C17/00 |
| X | DE 10 2012 111836 A1 (SCHOTT AG [DE]) 5. Juni 2014 (2014-06-05) * das ganze Dokument * * inbesondere Ausführungsbeispiele 1-3 * ----- | 1-9 | |
| X | EP 3 222 594 B1 (SCHOTT AG [DE]) 29. April 2020 (2020-04-29) * das ganze Dokument * * insbesondere Ausführungsbeispiel 1 * ----- | 1-9 | |

**RECHERCHIERTE SACHGEBIETE (IPC)**

**C03C**

Der vorliegende Recherchenbericht wurde für alle Patentansprüche erstellt

| Recherchenort | Abschlußdatum der Recherche | Prüfer |
|---|---|---|
| **München** | **19. Dezember 2023** | **Heer, Stephan** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 3883

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2023

| Im Recherchenbericht angeführtes Patentdokument | Datum der Veröffentlichung | Mitglied(er) der Patentfamilie | | Datum der Veröffentlichung |
|---|---|---|---|---|
| DE 202020001408 U1 | 29-05-2020 | DE | 202020001408 U1 | 29-05-2020 |
| | | EP | 3892597 A1 | 13-10-2021 |
| DE 102012111836 A1 | 05-06-2014 | CN | 104936775 A | 23-09-2015 |
| | | DE | 102012111836 A1 | 05-06-2014 |
| | | EP | 2928690 A2 | 14-10-2015 |
| | | JP | 6053949 B2 | 27-12-2016 |
| | | JP | 2016505417 A | 25-02-2016 |
| | | KR | 20150065858 A | 15-06-2015 |
| | | US | 2015267079 A1 | 24-09-2015 |
| | | WO | 2014086619 A2 | 12-06-2014 |
| EP 3222594 B1 | 29-04-2020 | DE | 102016105290 A1 | 28-09-2017 |
| | | EP | 3222594 A1 | 27-09-2017 |
| | | JP | 6930843 B2 | 01-09-2021 |
| | | JP | 2017193480 A | 26-10-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008031428 A1
- DE 102008031426 A1
- EP 1730085 B1
- WO 2005092810 A2
- JP 2011216457 A
- JP 6231066 B
- JP 206024 B
- JP 2019519458 A
- EP 3511631 A1
- EP 3222595 A1
- WO 2020122069 A1

**In der Beschreibung aufgeführte Nicht-Patentliteratur**

- *CHEMICAL ABSTRACTS,* 12237-24-0